# EUROPÄISCHE PATENTANMELDUNG

(11) **EP 0 895 952 A1**
(43) Veröffentlichungstag der Anmeldung: **10.02.1999**
(21) Anmeldenummer: 98114503.0
(22) Anmeldetag: 01.08.1998
(51) Int. Cl.: B65G 69/14, B65G 65/48, B01J 8/00, C22B 1/02

(54) **Vorrichtung zum Austrag von Material aus einem Reaktor**

(30) Priorität: 06.08.1997 AT 1321/97
(71) Anmelder: Andritz-Patentverwaltungs-Gesellschaft m.b.H., 8045 Graz (AT)
(72) Erfinder: Lebl, Albert Dipl.-Ing. Dr., 1170 Wien (AT)
(74) Vertreter: Schweinzer, Friedrich

(57) **Zusammenfassung**

Die Erfindung betrifft eine Vorrichtung zum Austrag von Material aus einem Reaktor, insbesondere Sprühröstreaktor (1). Sie ist vornehmlich dadurch gekennzeichnet, daß im Austragkonus (2) ein Kegelbrecher (3) vorgesehen ist. Der Kegel des Kegelbrechers (3) weist Öffnungen (13) für Spülluft auf.

## Beschreibung

Die Erfindung betrifft eine Vorrichtung zum Austrag von Material aus einem Reaktor, insbesondere Sprühröstreaktor.

Bei den bekannten Sprühreaktoren sammelt sich das Oxid im unteren Konus des Reaktors, fällt in einen Walzenbrecher und wird über ein Zellenrad ausgetragen. Durch das Verfahren und die Art der Betriebsführung bedingt kommt es während dem Betrieb zu Oxidanbackungen an der Reaktorwand (Aufwachen von nicht genügend abgerösten Tropfen) und zu Ansetzungen am Brennermund (Ansinterungen von Metalloxiden durch Brennerflamme).

Diese Ansetzungen lösen sich kontinuierlich oder im starken Maße bei Temperaturänderungen im Reaktor und fallen herunter. Bei thermischen Veränderungen im Reaktor (Temperaturschock) kommt es auch zeitweise zu Abplatzungen von Ausmauerungssteinen oder Fugen, auch ganze Steine können mitunter herausbrechen. Diese Ansetzungen meist bis Handteller großen Schuppen (in Ausnahmefällen auch Platten bis zu einem Meter Durchmesser möglich) und die Ausmauerungsteile bis zur Ziegelgröße sind im Vergleich zur Teilchengröße vom Oxid (1 bis 300 µm) viel zu groß, um im System weiter behandelt werden zu können.

Zuerst müssen sie in cm-große Stücke gebrochen, aus dem Reaktor geschleust und mit einem Rechen herausgesiebt werden, bevor das Oxid in einer Pneumatikförderleitung in den Oxidbunker transportiert werden kann.

Pro Arbeitsschicht fällt zirka ein Schubkarren mit Ansinterungen an und muß entsorgt werden. Der Rechen muß pro Schicht regelmäßig inspiziert und gereinigt werden, da sonst durch den Unterdruck der Pneumatikförderung am Sieb anhaftende Oxidbrocken blockiert ist und sich die gesamte Oxidproduktion in den Schubkarren, und da dieser dafür zu klein ist, in kurzer Zeit über den gesamten Fußboden ergießt.

Dieser Anlagenteil ist ein stetiger Quell für Verschmutzung mit Oxidstaub.

Ziel der Erfindung war es daher, eine gute Zerkleinerung aller Oxidteilchen zu erreichen. Ein weiteres Ziel war es eine Trennung von Reaktor- und Außenatmosphäre zu gewährleisten.

Die Erfindung ist daher dadurch gekennzeichnet, daß im Austragkonus ein Kegelbrecher vorgesehen ist. Mit diesem Kegelbrecher kann der Grobanteil des im Reaktor anfallenden Oxides so fein gemahlen werden, daß er im weiteren Prozeßverlauf nicht mehr stört und eine Aussiebung der größeren Brocken entfällt.

Eine vorteilhaffe Weiterbildung der Erfindung ist dadurch gekennzeichnet, daß am äußeren Umfang Rippen vorgesehen sind. Dadurch wird die Mahleigenschaft des Kegelbrechers verbessert.

Eine günstige Ausgestaltung der Erfindung ist dadurch gekennzeichnet, daß der Kegelbrecher mit dem Austragskonus eine gasseitige Trennung zwischen Reaktor und Austragszellenrad ist. Es kommt zu einer besseren räumlichen Abtrennung zum Reaktor, so daß am Oxid anhaftende Säuregase leichter rückgespült werden können.

Eine vorteilhafte Ausgestaltung der Erfindung ist dadurch gekennzeichnet, daß der Kegel des Kegelbrechers Öffnungen für Spülluft aufweist. Durch die von unten eintretende Spülluff kann ein Oxidstau vermieden werden.

Eine vorteilhafte Weiterbildung der Erfindung ist dadurch gekennzeichnet, daß die Öffnungen durch Schutzbleche abgedeckt sind. Durch diese Schutzbleche kann ein direktes Austreten von größeren Oxidteilchen verhindert werden.

Eine günstige Weiterbildung der Erfindung ist dadurch gekennzeichnet, daß der Kegelbrecher mit einem vorhandenen Krählwerk auf einer Welle angebracht ist. So kann in günstiger Weise der Antrieb mit dem Antrieb des Krählwerkes verbunden und ein eigener Antrieb eingespart werden.

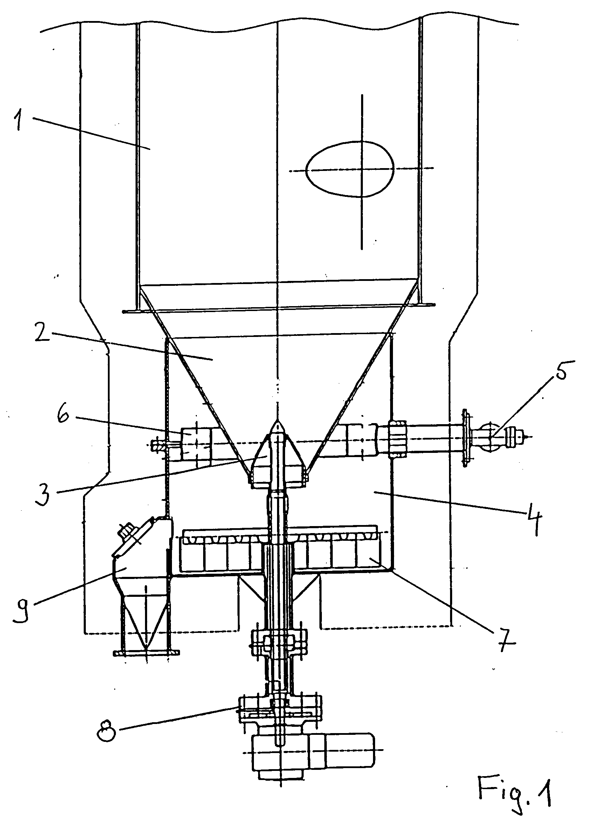

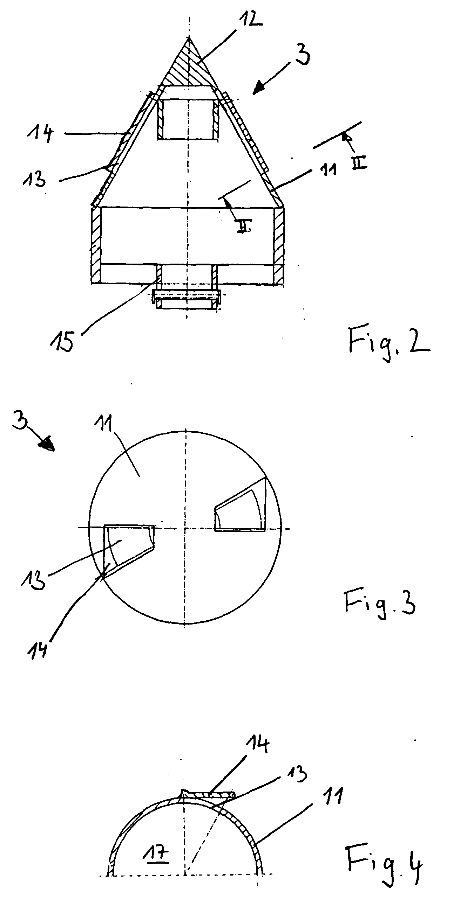

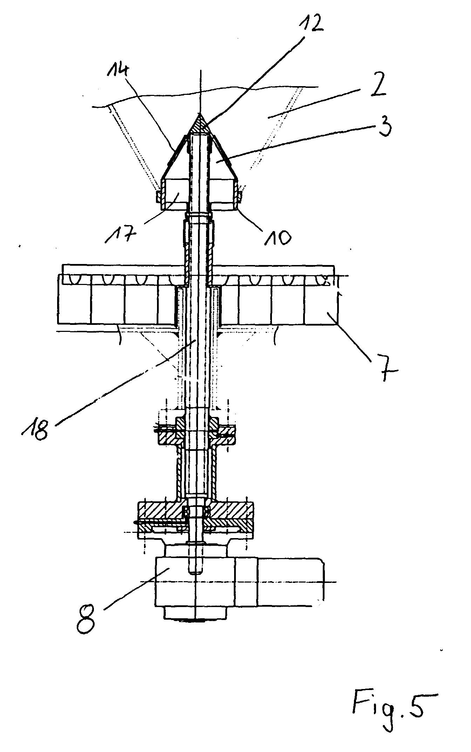

Die Erfindung wird nun im folgenden anhand der Zeichnungen beispielhaft beschrieben, wobei Fig. 1 einen Reaktor mit erfindungsgemäßem Austrag, Fig. 2 einen effindungsgemäßen Kegelbrecher, Fig. 3 eine Draufsicht auf Fig. 2, Fig. 4 einen Schnitt gemäß Linie IV-IV in Fig. 2 und Fig. 5 eine erfindungsgemäße Kombination von Kegelbrecher und Krählwerk darstellt.

Fig. 1 zeigt einen Sprühröstreaktor 1 mit Austragskonus 2 und einer kombinierten erfindungsgemäßen Austrags- und Abdichtungseinrichtung 3, die als Kegelbrecher ausgebildet ist. Das im Sprühröster 1 gebildete Oxid gelangt in den Austragkonus 2. Im Kegelbrecher 3 werden allfällige Agglomerationen der Oxidteilchen und auch Teile der Ausmauerung zerkleinert und in den Bereich 4 der Nachröstung ausgetragen. Gleichzeitig wird durch den Kegelbrecher 3 eine weitestgehende Trennung der Atmosphäre im Verdampfungsteil und der Atmosphäre im Oxidationsteil erreicht. Die Beheizung des Nachröstbereiches 4 erfolgt durch einen Gasbrenner 5, wobei dadurch ein Heizring 6 aufgewärmt wird. Am Boden des Nachröstbereiches 4 ist ein Krählwerk 7 mit Antrieb 8 angebracht, das das aus dem Reaktor ausgetragene Oxid von der Mitte des Nachröstbereiches 4 unter stetiger Durchmischung und somit stetiger Erneuerung der Reaktionsoberfläche, an den Rand zum Oxidaustrag 9 transportiert.

Fig. 2 zeigt einen erfindungsgemäßen Kegelbrecher 3 im Detail.Auf dem Brecherrohr 10 ist ein Kegelmantel 11 mit einem Vollkegel 12 an der Spitze angebracht. Im Kegelmantel 11 sind Öffnungen 13 für Spülluft vorgesehen, die durch Schutzbleche 14 gegen einströmendes Oxid geschützt sind. Der Kegel wird mittels unterem Fühtungsrohr 15 und oberem Führungsrohr 16 auf einer Welle befestigt.

Fig. 3 zeigt eine Draufsicht auf den Kegelbrecher 3, wobei hier speziell die Öffnungen 13 und Schutzbleche 14 zu sehen sind.

In Fig. 4 ist ein Schnitt gemäß Linie IV-IV in Fig. 2 dargestellt, woraus sich die Anordnung der Schutzbleche 14 zum Schutz des Innenraums 17 noch besser erkennen läßt.

Fig. 5 zeigt die Kombination eines Kegelbrechers 3 mit einem Krählwerk 7.

Beide Aggregate sind hier auf einer Welle 18 angeordnet und werden von nur einem Antrieb 8 angetrieben.

Die Erfindung ist nicht auf die dargestellten Ausführungen beschränkt, sie kann z.B. andere Arten der der Lagerung oder des Austragsgerätes aufweisen.

## Patentansprüche

1. Vorrichtung zum Austrag von Material aus einem Reaktor, insbesondere Sprühröstreaktor, dadurch gekennzeichnet, daß im Austragkonus (2) ein Kegelbrecher (3) vorgesehen ist.

2. Vorrichtung nach Anspruch 1, dadurch gekennzeichnet, daß am äußeren Umfang des Kegelbrechers (3) Rippen vorgesehen sind.

3. Vorrichtung nach Anspruch 1 oder 2, dadurch gekennzeichnet, daß der Kegelbrecher (3) mit dem Austragskonus (2) eine gasseitige Trennung zwischen Reaktor (1) und Austragszellenrad ist.

4. Vorrichtung nach einem der Ansprüche 1 bis 3, dadurch gekennzeichnet, daß der Kegel des Kegelbrechers (3) Öffnungen (13) für Spülluft aufweist.

5. Vorrichtung nach Anspruch 4, dadurch gekennzeichnet, daß die Öffnungen (13) durch Schutzbleche (14) abgedeckt sind.

6. Vorrichtung nach einem der Ansprüche 1 bis 5, dadurch gekennzeichnet, daß der Kegelbrecher (3) , mit einem vorhandenen Krählwerk (7) auf einer Welle (18) angebracht ist.
